# EUROPEAN PATENT APPLICATION

(11) **EP 4 635 761 A1**
(43) Date of publication of application: **22.10.2025**
(21) Application number: 23903141.2
(22) Date of filing: 02.11.2023
(51) Int. Cl.: B60H 1/00, B60H 1/32, B60R 13/08, B62D 25/08

(54) **COVER STRUCTURE OF VEHICLE AIR CONDITIONING DEVICE**

(30) Priority: 14.12.2022 JP 2022199523
(71) Applicant: Highly Marelli Japan Corporation, Tokyo 163-6014 (JP)
(72) Inventor: TSUKUDA, Ryuuji, Tokyo 163-6014 (JP); ISHIKAWA, Takahito, Tokyo 163-6014 (JP)
(74) Representative: Grünecker Patent- und Rechtsanwälte PartG mbB
(86) International application number: PCT/JP2023/039584
(87) International publication number: WO 2024/127843

(57) **Abstract**

A cover structure (10) of a vehicle air-conditioning device (20) includes: a partition wall (18) configured to separate an inside and outside of a vehicle cabin (16), in which a passenger rides, the partition wall having an opening portion (30) in which a vehicle air-conditioning device (20) is arranged, the vehicle air-conditioning device (20) being provided across the inside and outside of the vehicle cabin (16); and a cover member (22) configured to cover the opening portion (30) and at least a part of the vehicle air-conditioning device (20) provided outside the vehicle cabin (16), wherein the cover structure (10) further comprises an attenuating member provided at an inner side of the cover member (22), the attenuating member being configured to attenuate sound, and the attenuating member is formed of a plurality of component members (150, 200, 320, 500) forming the attenuating member in a state in which the component members (150, 200, 320, 500) are assembled by being brought into contact with each other.

## Description

### TECHNICAL FIELD

The present invention relates to a cover structure of a vehicle air-conditioning device.

### BACKGROUND ART

JP2019-202755A discloses a vehicle air-conditioning device in which a part of a vehicle air-conditioning device is arranged in an engine compartment in order to ensure a larger vehicle cabin space, and the component is covered with a cover member.

### SUMMARY OF INVENTION

However, in the vehicle air-conditioning device, in order to take in the air in the vehicle cabin or to supply the air, which has been air-conditioned, to the vehicle cabin, it is necessary to place a part of the vehicle air-conditioning device in the vehicle cabin. For this reason, it is necessary to form an opening portion having a predetermined size in a partition wall, such as a firewall, a dash lower panel, or the like, that is arranged between the engine compartment and the vehicle cabin.

Meanwhile, the engine compartment, etc. forming a driving source compartment is provided outside the vehicle cabin. This engine compartment includes noise sources such as an engine, a transmission, a motor, an inverter, a DC converter, and so forth. There is a risk in that external cabin noise consisting of the noise generated by various vehicle components outside the vehicle cabin, as in this example, and the noise transmitted from outside the vehicle to inside the vehicle, such as road noise, enter inside the vehicle cabin through the opening portion formed in the partition wall.

An object of the present invention is to suppress intrusion of external vehicle-cabin noise into the vehicle cabin through an opening portion for a vehicle air-conditioning device formed in the partition wall, which separates the inside and the outside of the vehicle cabin, compared with a case in which the opening portion is covered with a resin cover made of a single material.

According to an aspect of the present invention, a cover structure of a vehicle air-conditioning device includes: a partition wall configured to separate an inside and outside of a vehicle cabin, in which a passenger rides, the partition wall having an opening portion in which a vehicle air-conditioning device is arranged, the vehicle air-conditioning device being provided across the inside and outside of the vehicle cabin; and a cover member configured to cover the opening portion and at least a part of the vehicle air-conditioning device provided outside the vehicle cabin, wherein the cover structure further comprises an attenuating member provided at an inner side of the cover member, the attenuating member being configured to attenuate sound, and the attenuating member is formed of a plurality of component members forming the attenuating member in a state in which the component members are assembled by being brought into contact with each other.

In the above-described aspect, the attenuating member that attenuates sound is provided at the inner side of the cover member that covers the opening portion and at least a part of the vehicle air-conditioning device provided outside the vehicle cabin, and the attenuating member is formed of a plurality of component members forming the attenuating member in a state in which the component members are assembled by being brought into contact with each other. Therefore, even in a case in which the inner side of the cover member is formed to have the surface shape including a curved surface, surfaces with level differences, or the like, it is possible to arrange, in a manner conforming to the surface shape of the inner side of the cover member, the plurality of component members at corresponding locations so as to be in contact with each other.

Therefore, it is possible to suppress the intrusion of the external cabin noise into the vehicle cabin through the opening portion for the vehicle air-conditioning device formed in the partition wall, which separates the inside and the outside of the vehicle cabin, compared with a case in which the opening portion is covered with a resin cover made of a single material.

### BRIEF DESCRIPTION OF DRAWINGS

[FIG. 1] FIG. 1 is an exploded perspective view of a main part of a vehicle to which a cover structure according to an embodiment of the present invention is applied.
[FIG. 2] FIG. 2 is a perspective view showing the cover member.
[FIG. 3] FIG. 3 is a bottom view showing a lid portion of the cover member.
[FIG. 4] FIG. 4 is a rear view showing a cover main body of the cover member.
[FIG. 5] FIG. 5 is a V-V sectional view in FIG. 4.
[FIG. 6] FIG. 6 is an explanatory diagram showing a state in which a left side wall surface of a cover main body is viewed from the inside.
[FIG. 7] FIG. 7 is a perspective view showing an upper end portion of a left side wall component member.
[FIG. 8] FIG. 8 is a sectional view of a main part showing a portion where a pipe is inserted into the cover member.

### DESCRIPTION OF EMBODIMENTS

In the following, a vehicle 12 to which a cover structure 10 (hereinafter, simply referred to as "the cover structure 10") of a vehicle air-conditioning device 20 (hereinafter, sometimes simply referred to as "the air-conditioning device 20") according to an embodiment of the present invention is applied will be described with reference to the drawings.

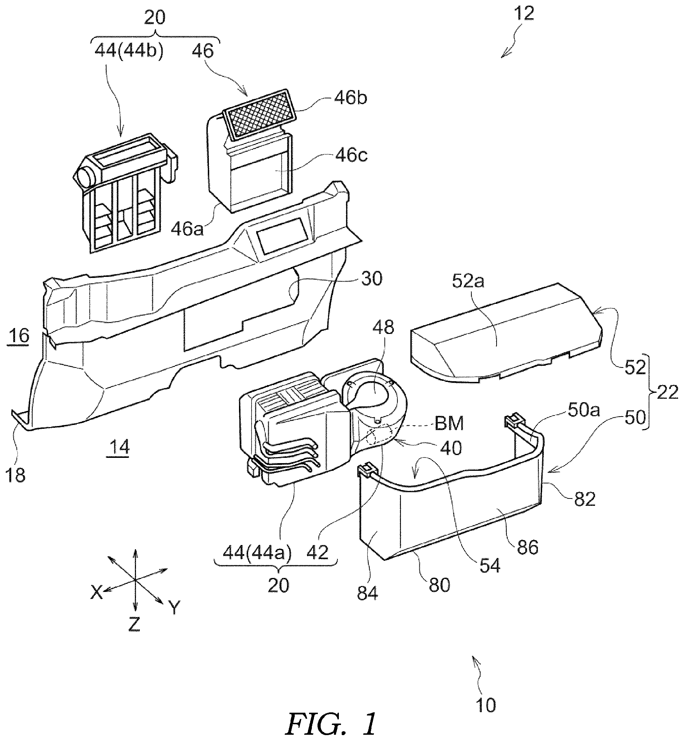

First, with reference to FIG. 1, an overall configuration of the vehicle 12 will be described. FIG. 1 is an exploded perspective view of a main part of the vehicle 12 to which the cover structure 10 according to the embodiment of the present invention is applied. In FIG. 1, the X axis extends in the vehicle length direction (the front-rear direction), the Y axis extends in the vehicle width direction (the left-right direction), and the Z axis extends in the vehicle height direction (the up-down direction). The X axis, the Y axis, and the Z axis are perpendicular to each other.

As shown in FIG. 1, the vehicle 12 has an engine compartment 14 (a motor compartment in a case of an electric vehicle) serving as a driving source compartment, a vehicle cabin 16, a partition wall 18, the vehicle air-conditioning device 20 (hereinafter, simply referred to as "the air-conditioning device 20"), and a cover member 22.

The engine compartment 14 is provided at a front part of the vehicle 12. In the engine compartment 14, an engine (not shown), an electric motor (not shown), or the like serving as a driving source for driving driving wheels (not shown) of the vehicle 12 is accommodated.

The vehicle cabin 16 is provided at the rear side of the engine compartment 14 in the vehicle. In other words, the engine compartment 14 and the vehicle cabin 16 are provided so as to be positioned side by side in the front-rear direction of the vehicle 12. A passenger rides in the vehicle cabin 16.

The partition wall 18 separates the engine compartment 14 and the vehicle cabin 16. In other words, the partition wall 18 separates the inside and the outside of the vehicle cabin 16. The partition wall 18 prevents the noise in the engine compartment 14 or the noise outside the vehicle 12 from intruding into the vehicle cabin 16. An opening portion 30 is provided in the partition wall 18.

The air-conditioning device 20 has an HVAC (Heating Ventilation and Air Conditioning) unit 40 and a refrigeration cycle circuit (not shown).

The HVAC unit 40 is configured such that the air used for the air-conditioning passes therethrough. The HVAC unit 40 has a case 42, an air-conditioning device main body 44, an inside/outside-air switching device 46, and an air blower 48 including a the blower motor BM serving as a motor.

In a general air-conditioning device, the HVAC unit 40 is hidden so as not to be visible from the passenger in the vehicle cabin 16 by arranging all of its components in the front part in the vehicle cabin 16 (the rear side of the partition wall 18) and by covering them from above with an instrument panel (not shown).

In contrast, in the air-conditioning device 20 according to the embodiment of the present invention, the HVAC unit 40 is divided and arranged in the engine compartment 14 and the vehicle cabin 16, and the divided parts are connected through the opening portion 30 of the partition wall 18.

Specifically, in the air-conditioning device 20, the air blower 48 and an evaporator of the refrigeration cycle circuit or heating equipment, etc. for cabin heating (not shown) are provided in the engine compartment 14, and other components such as the inside/outside-air switching device 46 are provided in the vehicle cabin 16.

With such a configuration, the air-conditioning device 20 that is arranged in the vehicle cabin 16 has a portion protruding into the engine compartment 14 through the opening portion 30 of the partition wall 18, and so, with the air-conditioning device 20, a larger space is secured inside the vehicle cabin 16 by arranging a part of the components inside the engine compartment 14.

The case 42 accommodates the air blower 48, the evaporator, and so forth (not shown). The case 42 defines an internal space through which the air used for the air-conditioning flows.

The air blower 48 that is arranged in the engine compartment 14 is rotationally driven by the blower motor BM. The air blower 48 takes in the air in the vehicle cabin 16 and outside air into the HVAC unit 40.

The air-conditioning device main body 44 has a front side portion 44a and a rear side portion 44b. The front side portion 44a is arranged in the engine compartment 14. The evaporator (not shown) is accommodated in the front side portion 44a. The rear side portion 44b is accommodated in the vehicle cabin 16. The rear side portion 44b is provided with an air outlet port switching device (not shown) that switches from which air outlet port inside the vehicle cabin 16 the air is to be blown.

The inside/outside-air switching device 46 has an inside air intake port 46a, an outside air intake port 46b, and a filter 46c. The air in the vehicle cabin 16 is taken in from the inside air intake port 46a. The air outside the vehicle 12 (the outside air) is taken in from the outside air intake port 46b. The inside/outside-air switching device 46 performs switching between the inside air intake port 46a or the outside air intake port 46b depending on which port is to be used for taking in the air.

The filter 46c is detachably mounted inside the inside/outside-air switching device 46. The filter 46c cleans the air taken in by the air blower 48 into the HVAC unit 40 by removing fine particles from the air.

The heat exchange performed by the air-conditioning device 20 will be described briefly.

The above-described refrigeration cycle circuit (not shown) has a compressor (not shown), a condenser (not shown), an expansion valve (not shown), an evaporator (not shown), a heater (not shown), and so forth. In the refrigeration cycle circuit, a gaseous cooling medium is compressed by the compressor to a high temperature and high pressure state, the cooling medium is condensed and liquefied by means of heat exchange with the outside air in the condenser, a liquid cooling medium is depressurized and expanded by the expansion valve, and the cooling medium is evaporated in the evaporator by means of heat exchange with the air to be used for the air-conditioning.

The evaporator (not shown) is provided in the HVAC unit 40 and cools and dehumidifies the air to be supplied to the vehicle cabin 16 by means of heat exchange with the cooling medium.

### (Cover Member)

The cover member 22 is provided in the engine compartment 14 by being attached to the partition wall 18. The cover member 22 is attached from the vehicle front side of the vehicle cabin 16 towards the vehicle rear side.

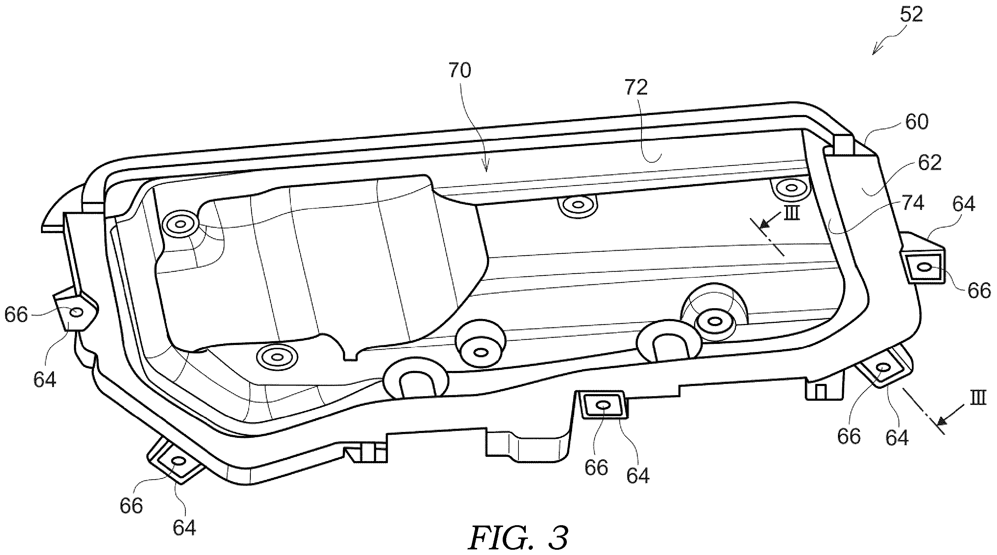

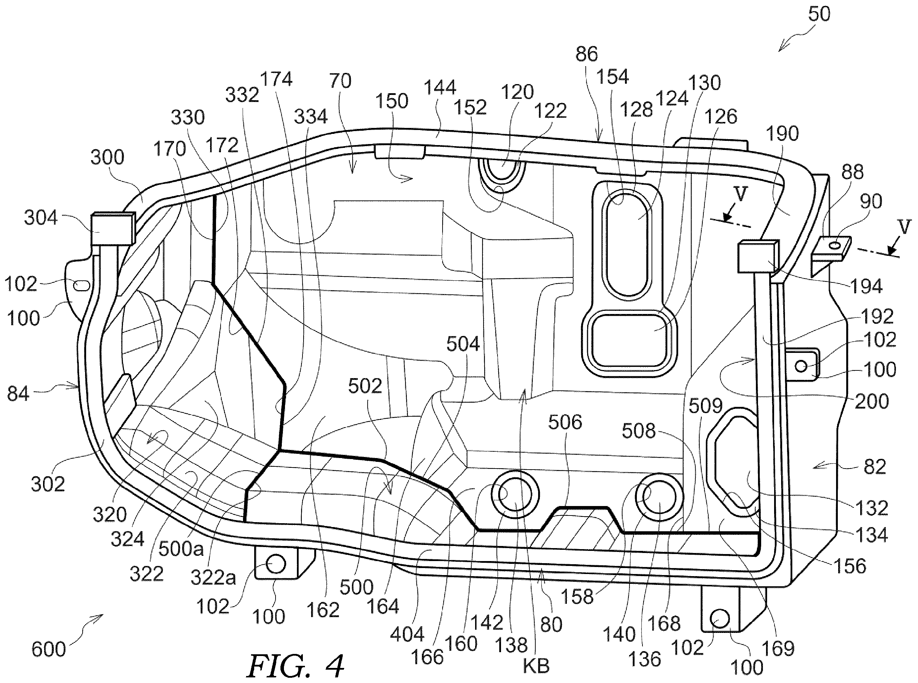

In the cover member 22, a soundproof member 70 (see FIGs. 3 and 4), which is an example of an attenuating member, is provided so as to be extended along an inner surface. The soundproof member 70 has at least one of the insulating function that insulates sound and the sound absorbing function that absorbs sound. In this configuration, the soundproof member 70 attenuates sound by having both of the insulating function and the sound absorbing function. The soundproof member 70 is formed of, for example, foamed urethane, foamed rubber, and so forth. In addition, the soundproof member 70 may be configured to have an inside air layer. In addition, the soundproof member 70 may be configured to have a surface with recesses and protrusions. The soundproof member 70 is configured by appropriately selecting the materials, structures, shapes, and so forth exemplified above in consideration of the degree to which the intrusion of the external vehicle-cabin noise to be suppressed, and other required specifications. As another example, the attenuating member may also be a vibration suppression member for suppressing the vibration that is provided so as to extend along the inner surface of the cover member 22. In this case, in addition to a vibration suppression function that suppresses the vibration, the attenuating member may also have at least one of the insulating function and the sound absorbing function described above.

The soundproof member 70 is formed of a plurality of component members 72, 150, 200, 320, and 500 that are divided into multiple parts (see FIGs. 3 and 4). In an assembled state 600 in which the component members 150, 200, 320, and 500 are respectively assembled so as to be in into contact with each other, the soundproof member 70, which is provided along an inner surface of a cover main body 50 of the cover member 22, is formed by the respective component members 150, 200, 320, and 500. In addition, the soundproof member 70, which is provided along an inner surface of a lid portion 52 of the cover member 22, is formed of the component member 72.

The cover member 22 covers and hides some of the components of the air-conditioning device 20 that protrudes into the engine compartment 14, such as the air blower 48, the evaporator (not shown), or the like, and the opening portion 30 of the partition wall 18. The cover member 22 prevents the noise in the engine compartment 14 or the noise outside the vehicle 12 from intruding into the vehicle cabin 16 through the opening portion 30.

As described above, the cover member 22 has the cover main body 50 and the lid portion 52. In a state in which the cover main body 50 is attached to the partition wall 18, the cover main body 50 forms an upwardly open accommodation space 54 together with the partition wall 18. The lid portion 52 is detachably attached to the cover main body 50 and closes an upper opening portion 50a of the cover main body 50. Although the opening portion 30 opens in the partition wall 18, in a state in which the lid portion 52 is attached to the cover member 22, the engine compartment 14 and the vehicle cabin 16 are completely separated from each other by the partition wall 18, the cover main body 50, and the lid portion 52. Note that, whether the cover main body 50 is directly attached to the partition wall 18 or attached to the partition wall 18 via another member, as long as the engine compartment 14 and the vehicle cabin 16 are completely separated from each other, any other configuration is possible.

By removing the lid portion 52 from the cover main body 50, which is attached to the partition wall 18, the air blower 48 can be accessed through the upper opening portion 50a of the cover main body 50, as a result, a worker can easily perform a maintenance work of the air blower 48.

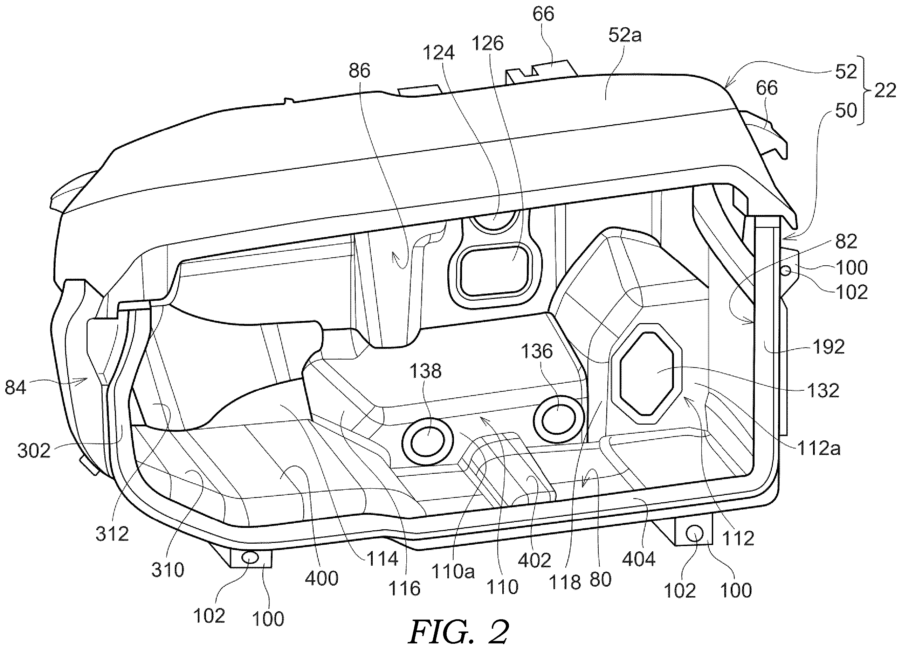

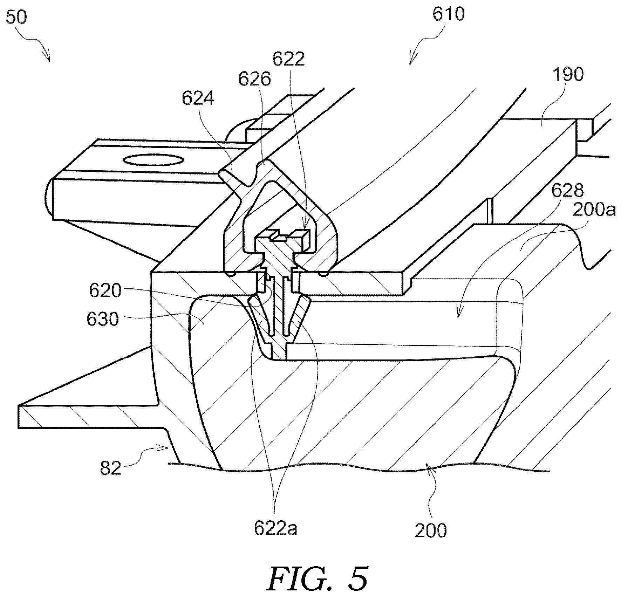

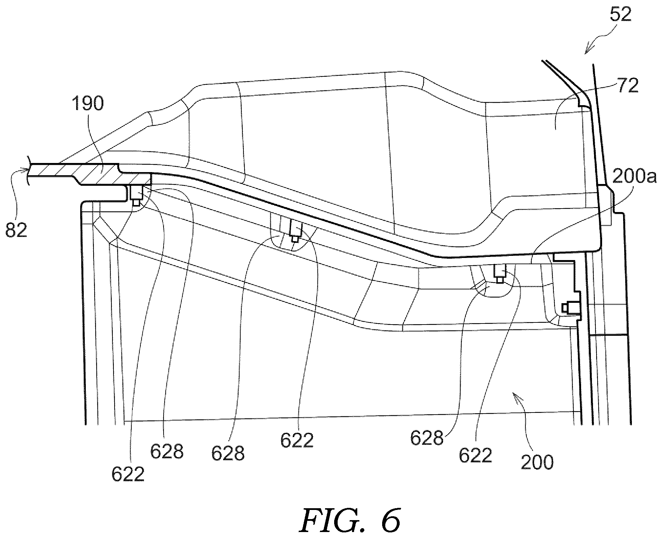

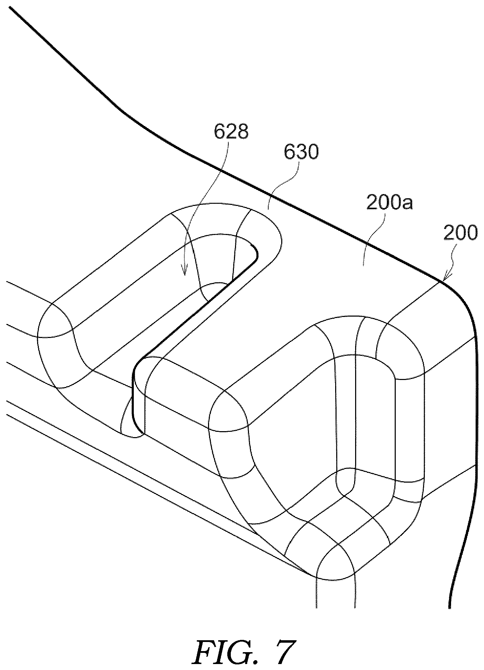

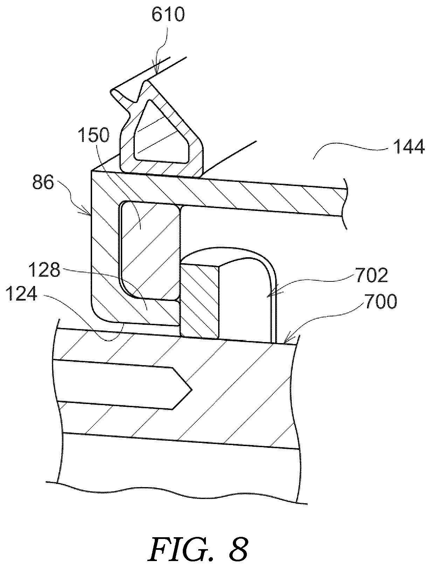

Next, with reference to FIGs. 2 to 8, the cover member 22 will be described specifically. FIG. 2 is a perspective view showing the cover member 22. Note that FIG. 2 shows a state in which the soundproof member 70 is removed. FIG. 3 is a bottom view showing the lid portion 52 of the cover member 22. FIG. 4 is a rear view showing the cover main body 50 of the cover member 22. FIG. 5 is a V-V sectional view in FIG. 4. FIG. 6 is an explanatory diagram showing a state in which a left side wall surface 82 of the cover main body 50 is viewed from the inside. FIG. 7 is a perspective view showing an upper end portion of the left side wall component member 200. FIG. 8 is a sectional view of a main part showing a portion where a pipe is inserted into the cover member 22.

### (Lid Portion)

As shown in FIGs. 2 and 3, the lid portion 52 is formed of, for example, a plate material made of a synthetic resin. The lid portion 52 is formed to have the laterally elongated shape. The lid portion 52 has an inclined portion 52a that inclines downward toward the front side of the vehicle (see FIG. 1). In addition, the lid portion 52 is formed to have a shape that avoids interference with structures arranged in the engine compartment 14.

As shown in FIG. 3, at the periphery of the lid portion 52, a standing wall 60 that extends out from the inner surface in the thickness direction of the lid portion 52 is formed. From a tip end of the standing wall 60, a flat surface 62 extends inward. At end portions of the standing wall 60, a plurality of tongue pieces 64 extend out from an outer surface. Each of the tongue pieces 64 is formed with a through hole 66.

### (Lid Side Component Member)

The lid portion 52 is provided with the lid side component member 72 that forms the soundproof member 70.

The lid side component member 72 has a shape that conforms to the inner surface of the lid portion 52, and the lid side component member 72 is in close contact with the inner surface of the lid portion 52.

The lid side component member 72 has a predetermined thickness. The lid side component member 72 includes a wall portion 74 that extends along the standing wall 60 of the lid portion 52. The wall portion 74 is arranged along the standing wall 60 of the lid portion 52 and reaches a lower portion of the flat surface 62.

### (Cover Main Body)

As shown in FIGs. 2 and 4, the cover main body 50 is made of a synthetic resin, for example. The cover main body 50 has a bottom surface 80 having the laterally elongated shape and the left side wall surface 82 that extends upward from a left edge of the bottom surface 80. The cover main body 50 has: a right side wall surface 84 that extends upward from a right edge of the bottom surface 80; and a front wall surface 86 with which the left side wall surface 82 and the right side wall surface 84 are provided so as to be connected and that has a lower edge provided so as to be connected to the bottom surface 80.

The bottom surface 80, the left side wall surface 82, the right side wall surface 84, and the front wall surface 86 of the cover main body 50 are respectively formed with recesses and protrusions for avoiding the interference with the structures arranged in the engine compartment 14.

As shown in FIG. 4, on an upper edge of the cover main body 50, lid fixing pieces 88 that extend from an outer surface are provided at positions corresponding to the tongue pieces 64 of the lid portion 52. The lid fixing pieces 88 are each formed with a fixing hole 90.

With such a configuration, the cover main body 50 is configured such that the lid portion 52 can be fixed, in a state in which an upper part of the cover main body 50 is covered by the lid portion 52, by fastening bolts and nuts respectively inserted into the through holes 66 of the tongue pieces 64 of the lid portion 52 and the fixing holes 90 of the lid fixing pieces 88.

On the rear edge of the cover main body 50, main body fixing pieces 100 that extend out from the outer surface are provided at a plurality of locations. The main body fixing pieces 100 are each formed with insertion hole 102. With such a configuration, the cover main body 50 is configured so as to be able to be fixed to the partition wall 18 by screws that are respectively inserted into the insertion holes 102 of the main body fixing pieces 100.

### (Front Wall Surface)

As shown in FIG. 2, the front wall surface 86 is formed with a first front wall protruding portion 110 and a second front wall protruding portion 112 that respectively protrude inward to avoid the interference with the structures arranged in the engine compartment 14. End surfaces of the first front wall protruding portion 110 and the second front wall protruding portion 112 are flat. The second front wall protruding portion 112 protrudes more inward than the first front wall protruding portion 110.

A flat first inclined surface 116 is formed between a general surface 114 (the portion other than the first front wall protruding portion 110 and the second front wall protruding portion 112) of the front wall surface 86 and a first protruding surface 110a of the first front wall protruding portion 110. A flat second inclined surface 118 is formed between the first protruding surface 110a and a second protruding surface 112a of the second front wall protruding portion 112.

As shown in FIG. 3, at the central portion of an upper edge of the front wall surface 86, a wiring hole 120, through which the wiring of the blower motor BM of the air blower 48 passes, is formed. On the inner surface of the front wall surface 86, a wiring hole flange 122 that extends out from an opening edge portion of the wiring hole 120 is formed.

On the side of the wiring hole 120 of the front wall surface 86, a longitudinally elongated hole 124 and a laterally elongated hole 126, into each of which a cooling medium pipe for allowing flow of the cooling medium is inserted, are formed. On the inner surface of the front wall surface 86, a longitudinally elongated hole flange 128 that extends out from an opening edge portion of the longitudinally elongated hole 124 is formed. In addition, on the inner surface of the front wall surface 86, a laterally elongated hole flange 130 that extends out from an opening edge portion of the laterally elongated hole 126 is formed.

At the second front wall protruding portion 112 that is formed at the position close to the left side wall surface 82 on the front wall surface 86 (see FIG. 2), a heater hole 132, into which a heater pipe is inserted, is formed. On the inner surface of the front wall surface 86, a heater hole flange 134 that extends out from an opening edge portion of the heater hole 132 is formed.

At the first front wall protruding portion 110 that is formed at the position close to the bottom surface 80 on the front wall surface 86 (see FIG. 2), drainage holes 136 and 138, into which drainage pipes are respectively inserted, are formed. On the inner surface of the front wall surface 86, drainage hole flanges 140 and 142 that respectively extend from opening edge portions of the drainage holes 136 and 138 are formed.

The upper edge of the front wall surface 86 is formed with a front wall flange portion 144 that extends out from the inner surface.

### (Front Wall Component Member)

The front wall surface 86 is provided with the front wall component member 150 that forms the soundproof member 70.

The front wall component member 150 has a shape that conforms to the recesses and protrusions of the inner surface of the front wall surface 86 and is in close contact with the inner surface of the front wall surface 86.

Specifically, the front wall component member 150 has: a flat general portion 162 that is in close contact with the general surface 114 of the front wall surface 86 (see FIG. 2); and a flat first inclined portion 164 that is in close contact with the first inclined surface 116 of the front wall surface 86 (see FIG. 2). In addition, the front wall component member 150 has: a flat first protruding portion 166 that is in close contact with the first protruding surface 110a of the first front wall protruding portion 110 of the front wall surface 86 (see FIG. 2); and a flat second inclined portion 168 that is in close contact with the second inclined surface 118 of the front wall surface 86 (see FIG. 2). Furthermore, the front wall component member 150 has a flat second protruding portion 169 that in close contact with the second protruding surface 112a of the second front wall protruding portion 112 of the front wall surface 86 (see FIG. 2).

An upper edge of the front wall component member 150 has a shape that follows along the front wall flange portion 144. A lower edge of the front wall component member 150 has a shape that follows along the bottom surface 80. With such a configuration, movement of the front wall component member 150 in the up-down direction is restricted by the front wall flange portion 144 and the bottom surface 80.

A left edge of the front wall component member 150 has a shape that follows along the left side wall surface 82. A right edge of the front wall component member 150 has a shape that follows along the right side wall surface 84. With such a configuration, movement of the front wall component member 150 in the left-right direction is restricted by the left side wall surface 82 and the right side wall surface 84.

The front wall component member 150 has a predetermined thickness and is formed such that the thickness dimension of an upper end portion, to which the lid portion 52 is attached, is thicker than other portions.

The front wall component member 150 has a wiring opening portion 152 that is formed at a position corresponding to the wiring hole 120. An opening edge portion of the wiring opening portion 152 surrounds the wiring hole flange 122 of the front wall surface 86.

The front wall component member 150 has a cooling-medium opening portion 154 that is formed at a position corresponding to the longitudinally elongated hole 124 and the laterally elongated hole 126. An opening edge portion of the cooling-medium opening portion 154 surrounds the longitudinally elongated hole flange 128 and the laterally elongated hole flange 130.

In addition, the front wall component member 150 has a heater opening portion 156 that is formed at a position corresponding to the heater hole 132. An opening edge portion of the heater opening portion 156 surrounds the heater hole flange 134.

The front wall component member 150 has drainage opening portions 158 and 160 that are formed at respective positions corresponding to the drainage holes 136 and 138. The drainage opening portions 158 and 160 respectively surround the drainage hole flanges 140 and 142.

In a state in which the cover main body 50 is attached to the partition wall 18, the front wall component member 150 is formed such that the thickness dimension of a proximity portion KB of the air-conditioning device 20 that is arranged in proximity to the blower motor BM serving as the motor of the air blower 48 is thicker than other portions.

The right edge of the front wall component member 150 has: a first front surface straight portion 170 that extends in a straight line from the upper edge side; a second front surface straight portion 172 that extends diagonally in a straight line from the first front surface straight portion 170; and a third front surface straight portion 174 that extends downward in a straight line from the second front surface straight portion 172.

The left edge of the front wall component member 150 that is arranged on the left side wall surface 82 side is formed in a straight line extending along the left side wall surface 82 (not shown). The upper edge of the front wall component member 150 that is arranged on the front wall flange portion 144 side is formed in a straight line extending along the front wall flange portion 144 (not shown).

### (Left Side Wall Surface)

An upper edge of the left side wall surface 82 is formed with a left wall flange portion 190 that extends out from the inner surface. The left wall flange portion 190 is in continuous with the front wall flange portion 144. A rear edge of the left side wall surface 82 is formed with a left-wall rear flange portion 192 that extends out from the inner surface.

An upper end portion of the left-wall rear flange portion 192 is provided with a left sealing member 194 having a rectangular shape. The left sealing member 194 is a sponge-like component and is made of, for example, foamed EPDM (ethylene propylene diene rubber). The left sealing member 194 is in close contact with the lid portion 52 that is attached to the cover main body 50 and the partition wall 18 to which the cover main body 50 is fixed.

### (Left Side Wall Component Member)

The left side wall surface 82 is provided with the left side wall component member 200 that forms the soundproof member 70.

The left side wall component member 200 has a shape that conforms to the inner surface of the left side wall surface 82 and is in close contact with the inner surface of the left side wall surface 82.

An upper edge of the left side wall component member 200 is formed to have a straight line extending along the left wall flange portion 190. A lower edge of the left side wall component member 200 is formed to have a straight line extending along the bottom surface 80. With such a configuration, movement of the left side wall component member 200 in the up-down direction is restricted by the left wall flange portion 190 and the bottom surface 80.

A front edge of the left side wall component member 200 is formed to have a shape that follows along the surface of the front wall component member 150. The front edge of the left side wall component member 200 is formed of a plurality of straight portions that are formed in straight lines matching with the surface shape the front wall component member 150 (not shown).

A rear edge of the left side wall component member 200 is formed in a straight line extending along the left-wall rear flange portion 192. With such a configuration, movement of the left side wall component member 200 in the front-rear direction is restricted by the front wall component member 150 and the left-wall rear flange portion 192.

The left side wall component member 200 has a predetermined thickness. The left side wall component member 200 is formed such that the thickness dimension of the upper end portion to which the lid portion 52 is attached is thicker than other portions.

### (Right Side Wall Surface)

An upper edge of the right side wall surface 84 is formed with a right wall flange portion 300 that extends out from the inner surface. The right wall flange portion 300 is in continuous with the front wall flange portion 144. With such a configuration, on the upper edge of the cover main body 50, the front wall flange portion 144, the left wall flange portion 190, and the right wall flange portion 300 are formed in a continuous manner.

In addition, a rear edge of the right side wall surface 84 is formed with a right wall rear flange portion 302 that extends out from the inner surface.

An upper end portion of the right wall rear flange portion 302 is provided with a right sealing member 304 having a rectangular shape. The right sealing member 304 is a sponge-like component and is made of a foamed EPDM (ethylene propylene diene rubber), for example. The right sealing member 304 is in close contact with the lid portion 52 that is attached to the cover main body 50 and the partition wall 18 to which the cover main body 50 is fixed.

As shown in FIG. 2, a lower portion of the right side wall surface 84 is formed with: a bottom side inclined surface 310 that gradually inclines downward as it extends toward the bottom surface 80; and a front side inclined surface 312 that gradually inclines upward as it extends toward the front wall surface 86 from the bottom side inclined surface 310.

### (Right Side Wall Component Member)

As shown in FIG. 4, the right side wall surface 84 is provided with the right side wall component member 320 that forms the soundproof member 70.

The right side wall component member 320 has a shape that conforms to the inner surface of the right side wall surface 84 and is in close contact with the inner surface of the right side wall surface 84.

Specifically, a lower portion of the right side wall component member 320 is formed to have a shape that follows along the bottom side inclined surface 310 of the right side wall surface 84 (see FIG. 2) and has a bottom side inclined portion 322 that is in close contact with the bottom side inclined surface 310. An edge portion 322a of the bottom side inclined portion 322 is formed in a straight line. In addition, the lower portion of the right side wall component member 320 is formed to have a shape that follows along the front side inclined surface 312 of the right side wall surface 84 (see FIG. 2) and has a front side inclined portion 324 that is in close contact with the front side inclined surface 312.

The right side wall component member 320 has a predetermined thickness. The right side wall component member 320 is formed such that the thickness dimension of the upper end portion to which the lid portion 52 is attached is thicker than other portions.

As described above, the front wall component member 150, the left side wall component member 200, and the right side wall component member 320 are formed to have the thicker thickness at the upper end portions that are prone to engine sound intrusion and that are closer to the passenger in the vehicle cabin 16, and so, the soundproofing effect is improved.

An upper edge of the right side wall component member 320 is formed in a straight line extending along the right wall flange portion 300. The right wall flange portion 300 is placed over the upper edge of the right side wall component member 320. At the lower portion of the right side wall component member 320, the bottom side inclined portion 322 is in close contact with the bottom side inclined surface 310 (see FIG. 2).

In addition, at the lower portion of the right side wall component member 320, the front side inclined portion 324 is in close contact with the front side inclined surface 312 (see FIG. 2). With such a configuration, movement of the right side wall component member 320 in the up-down direction is restricted by the right wall flange portion 300 and the bottom side inclined surface 310.

A front edge of the right side wall component member 320 has: a first left wall surface straight portion 330 that extends in a straight line from the upper edge side; a second left wall surface straight portion 332 that extends diagonally in a straight line from the first left wall surface straight portion 330; and a third left wall surface straight portion 334 that extends downward in a straight line from the second left wall surface straight portion 332.

The first left wall surface straight portion 330 is provided at the position corresponding to the first front surface straight portion 170 of the front wall component member 150, and the first left wall surface straight portion 330 is overlapped along the first front surface straight portion 170. The second left wall surface straight portion 332 is provided at the position corresponding to the second front surface straight portion 172 of the front wall component member 150, and the second left wall surface straight portion 332 is overlapped along the second front surface straight portion 172. The third left wall surface straight portion 334 is provided at the position corresponding to the third front surface straight portion 174 of the front wall component member 150, and the third left wall surface straight portion 334 is overlapped along the third front surface straight portion 174.

A rear edge of the right side wall component member 320 is formed in a straight line extending along the right wall rear flange portion 302. The rear edge of the right side wall component member 320 is overlapped with the right wall rear flange portion 302.

With such a configuration, movement of the right side wall component member 320 in the front-rear direction is restricted by the respective front surface straight portions 170, 172, and 174 of the front wall component member 150 and the right wall rear flange portion 302.

### (Bottom Surface)

The bottom surface 80 is formed with a first bottom surface protruding portion 400 and a second bottom surface protruding portion 402 that protrude inward to avoid the interference with the structures arranged in the engine compartment 14 (see FIG. 2).

A rear edge of the bottom surface 80 is formed with a bottom surface rear flange portion 404 that extends out from the inner surface. The bottom surface rear flange portion 404 is in continuous with the left-wall rear flange portion 192 and the right wall rear flange portion 302. With such a configuration, on the rear edge of the cover main body 50, the left-wall rear flange portion 192, the bottom surface rear flange portion 404, and the right wall rear flange portion 302 are formed in a continuous manner.

### (Bottom Surface Component Member)

The bottom surface 80 is provided with the bottom surface component member 500 that forms the soundproof member 70.

The bottom surface component member 500 has a shape that conforms to the bottom surface 80 having the recesses and protrusions and is in close contact with the inner surface of the bottom surface 80. The bottom surface component member 500 has a predetermined thickness.

A left edge of the bottom surface component member 500 is formed in a straight line extending along a surface of the left side wall component member 200. The left edge of the bottom surface component member 500 is overlapped with the left side wall component member 200.

A right edge 500a of the bottom surface component member 500 is formed in a straight line extending along an edge portion 322a of the bottom side inclined portion 322 of the right side wall component member 320. The right edge 500a of the bottom surface component member 500 is overlapped with the edge portion 322a of the bottom side inclined portion 322 of the right side wall component member 320.

With such a configuration, movement of the bottom surface component member 500 in the left-right direction is restricted by the left side wall component member 200 and the edge portion 322a of the bottom side inclined portion 322 of the right side wall component member 320.

A front edge of the bottom surface component member 500 has a portion corresponding to the general portion 162 of the front wall component member 150, a portion corresponding to a first protruding portion 166 of the front wall component member 150, and a portion corresponding to the second protruding portion 169 of the front wall component member 150.

At the front edge of the bottom surface component member 500, a first bottom surface straight portion 502 corresponding to the general portion 162 of the front wall component member 150 is formed in a straight line, and the first bottom surface straight portion 502 is overlapped with the general portion 162 of the front wall component member 150. At the front edge of the bottom surface component member 500, a second bottom surface straight portion 504 corresponding to the first inclined portion 164 of the front wall component member 150 is formed in a straight line, and the second bottom surface straight portion 504 is overlapped with the first inclined portion 164 of the front wall component member 150.

At the front edge of the bottom surface component member 500, a third bottom surface straight portion 506 corresponding to the first protruding portion 166 of the front wall component member 150 is formed in a straight line, and the third bottom surface straight portion 506 is overlapped with the first protruding portion 166 of the front wall component member 150. At the front edge of the bottom surface component member 500, a fourth bottom surface straight portion 508 corresponding to the second inclined portion 168 of the front wall component member 150 is formed in a straight line, and the fourth bottom surface straight portion 508 is overlapped with the second inclined portion 168 of the front wall component member 150 (not shown).

At the front edge of the bottom surface component member 500, a fifth bottom surface straight portion 509 corresponding to the second protruding portion 169 of the front wall component member 150 is formed in a straight line, and the fifth bottom surface straight portion 509 is overlapped with the second protruding portion 169 of the front wall component member 150.

A rear edge of the bottom surface component member 500 is formed in a straight line extending along the bottom surface rear flange portion 404. The rear edge of the bottom surface component member 500 is overlapped with the bottom surface rear flange portion 404. With such a configuration, movement of the bottom surface component member 500 in the front-rear direction is restricted by the front wall component member 150 and the bottom surface rear flange portion 404.

As described above, in each of component members 150, 200, 320, and 500, the edge portion in contact with another adjacent component member (150, 200, 320, 500) is formed in a straight line. In addition, in the assembled state 600 in which the respective component members 150, 200, 320, and 500 are assembled, one component member (150, 200, 320, 500) and another component member (150, 200, 320, 500), which are adjacent to each other, are configured such that their end portions are overlapped with each other.

### (Weatherstrip)

On the upper edge of the cover main body 50, a weatherstrip 610 (see FIG. 5), which is in close contact with the flat surface 62 of the lid portion 52, is provided so as to extend over the front wall flange portion 144, the left wall flange portion 190, and the right wall flange portion 300 (not shown). In addition, on the rear edge of the cover main body 50, the weatherstrip 610, which is in close contact with the partition wall 18, is provided so as to extend over the left-wall rear flange portion 192, the bottom surface rear flange portion 404, and the right wall rear flange portion 302 (not shown).

With such a configuration, in a state in which the lid portion 52 is attached to the cover main body 50, the intrusion of sound into the accommodated accommodation space 54, which is formed inside the cover main body 50, is suppressed and the airtightness, and watertightness of the accommodated accommodation space 54 are ensured.

As shown in FIG. 5, a specific explanation will be given by taking as an example a state in which the weatherstrip 610 is provided on the left wall flange portion 190 of the cover main body 50. Note that it is assumed that the weatherstrip 610 is also provided at other locations in the same manner as described below.

As shown in FIG. 5, a plurality of clip insertion holes 620 are provided in the left wall flange portion 190 of the cover main body 50 at multiple locations. In each of the clip insertion holes 620, hooks 622a at a tip end portion of a clip 622, which is provided in the weatherstrip 610, are inserted and engaged.

The weatherstrip 610 is made of a rubber material, for example. The weatherstrip 610 is formed to have a hollow triangular cross section. On one inclined surface of the weatherstrip 610, an extending strip 624 that extends substantially perpendicular to the inclined surface is formed.

In a fixed state, the weatherstrip 610 has a top portion 626 that protrudes upward. In this fixed state, the extending strip 624 extends obliquely outward as it extends in the extending direction of the top portion 626.

As shown in FIGs. 5 and 7, an end surface 200a of the left side wall component member 200, which is arranged at a lower portion of the left wall flange portion 190 and is formed to have a thicker wall, is formed with groove portions 628 in which tip end portions of the clips 622 are arranged. In addition, on the end surface 200a of the left side wall component member 200, a raised portion 630, which is higher than the groove portions 628, is provided on the left side wall surface 82 side of the groove portions 628 (see FIGs. 5 and 7).

As shown in FIG. 5, in a state in which the left side wall component member 200 is arranged along the inner surface of the left side wall surface 82, the raised portion 630 is arranged between the tip ends of the clips 622 and the left side wall surface 82. With such a configuration, by causing the tip ends of the clips 622 to come into contact with the raised portion 630, falling down of the left side wall component member 200 that is arranged along the left side wall surface 82 is suppressed.

With such a configuration, on the upper end portion of the left side wall surface 82, which is the end portion of the cover main body 50 surrounding a part of the upper opening portion 50a, the clips 622 serving as support members that support the end portion of the left side wall component member 200 so as to extend along the left side wall surface 82 of the cover main body 50 are provided.

### (Attachment Procedure)

When the soundproof member 70 is provided on the cover main body 50, the worker first installs the front wall component member 150 forming the soundproof member 70 to the inner surface of the front wall surface 86. As a result, the movement of the front wall component member 150 in the up-down direction is restricted by the front wall flange portion 144 and the bottom surface 80, and the movement the front wall component member 150 in the left-right direction is restricted by the left side wall surface 82 and the right side wall surface 84. In addition, falling down of the front wall component member 150 is suppressed by the clips 622.

Next, the worker installs the left side wall component member 200 forming the soundproof member 70 to the inner surface of the left side wall surface 82, thereby restricting the movement of the left side wall component member 200 in the up-down direction by the left wall flange portion 190 and the bottom surface 80. In addition, the falling down of the left side wall component member 200 is suppressed by the clips 622.

At this time, the worker suppresses the falling down of the left edge portion of the front wall component member 150 by placing and pressure-welding the end surface of the front edge of the left side wall component member 200 so as to overlap with the surface of the front wall component member 150.

Next, the worker installs the right side wall component member 320 forming the soundproof member 70 to the inner surface of the right side wall surface 84, thereby restricting the movement of the right side wall component member 320 in the up-down direction by the right wall flange portion 300 and the bottom side inclined surface 310. In addition, the worker suppresses the falling down of the right side wall component member 320 by the clips 622.

At this time, the worker suppresses the falling down of the right edge portion of the front wall component member 150 by placing and pressure-welding the end surface of the front edge of the right side wall component member 320 so as to overlap with the surface of the front wall component member 150.

Next, the worker installs the bottom surface component member 500 forming the soundproof member 70 to the inner surface of the bottom surface 80.

At this time, the worker restricts the movement of a lower end portion of the left side wall component member 200 by placing and pressure-welding the end surface of the left edge of the bottom surface component member 500 so as to overlap with the surface of the left side wall component member 200. In addition, the worker restricts the movement of a lower end portion of the right side wall component member 320 by placing and pressure-welding the end surface of the right edge 500a of the bottom surface component member 500 so as to overlap with the surface of the right side wall component member 320. Furthermore, the worker restricts the movement of a lower end portion of the front wall component member 150 by placing and pressure-welding the end surface of the front edge of the bottom surface component member 500 so as to overlap with the surface of the front wall component member 150.

Next, when the cover main body 50 is to be attached to the partition wall 18, the worker respectively inserts the wiring to be connected to the air-conditioning device 20, the cooling medium pipe, the heater pipe, the drainage pipe, and so forth into the holes 120, 124, 126, 132, 136, and 138, which are formed in the cover main body 50.

As shown in FIG. 8, an explanation will be given by taking as an example a case in which a cooling medium pipe 700 is inserted into the longitudinally elongated hole 124 of the front wall surface 86.

A seal member 702 is provided on an outer circumference portion of the cooling medium pipe 700 that is to be inserted into the longitudinally elongated hole 124. The seal member 702 is in close contact with the longitudinally elongated hole flange 128 that extends out from the opening edge portion of the longitudinally elongated hole 124 and with the portion of the front wall component member 150 that surrounds the longitudinally elongated hole flange 128.

The seal member 702 is made of a foamed PE (polyethylene) and a foamed EPDM (ethylene propylene diene rubber), and by causing the seal member 702 to come into close contact with the longitudinally elongated hole flange 128 and the front wall component member 150, it is possible to ensure the sound insulation, watertightness, and airtightness.

According to the embodiment mentioned above, the advantages described below are afforded.

The cover structure 10 of the vehicle air-conditioning device 20 includes: the partition wall 18 configured to separate the vehicle cabin 16, in which the passenger rides, and the outside of the vehicle cabin 16, the partition wall 18 having the opening portion 30 in which the vehicle air-conditioning device 20 is arranged, the vehicle air-conditioning device 20 being provided across the inside and outside of the vehicle cabin 16; and the cover member 22 configured to cover the opening portion 30 and at least the part of the vehicle air-conditioning device 20 provided outside the vehicle cabin 16. The cover structure 10 includes the attenuating member provided at the inner side of the cover member 22, the attenuating member being configured to attenuate sound, and the attenuating member is formed of the plurality of component members 150, 200, 320, and 500 forming the attenuating member in a state in which the component members 150, 200, 320, and 500 are assembled by being brought into contact with each other.

In this configuration, the attenuating member configured to attenuate the sound is provided at the inner side of the cover member 22 that covers the opening portion 30 and at least the part of the vehicle air-conditioning device 20 provided outside the vehicle cabin 16. The attenuating member is formed of the respective component members 150, 200, 320, and 500 that are divided into the multiple parts. Therefore, even in a case in which the inner side of the cover member 22 is formed to have a surface shape including a curved surface, surfaces with level differences, or the like, it is possible to arrange, in a manner conforming to the surface shape of the inner side of the cover member, the plurality of component members 150, 200, 320, and 500 at corresponding locations so as to be in contact with each other.

Therefore, with the cover structure 10 of the vehicle air-conditioning device 20, the intrusion of the external vehicle-cabin noise into the vehicle cabin 16 through the opening portion 30 for the vehicle air-conditioning device 20 formed in the partition wall 18, which separates the inside and outside of the vehicle cabin, can be suppressed compared with a case in which the opening portion is covered with a resin cover made of a single material.

As a result, it becomes possible to suppress, compared with a case in which the opening portion is covered with a resin cover made of a single material, the intrusion into the vehicle cabin 16 of the external vehicle-cabin noise consisting of the noise transmitted from the outside of the vehicle to the inside of the vehicle including, for example, the noise generated by the various vehicle components outside the vehicle cabin, such as an engine, a transmission, and the like arranged in the engine compartment 14, or a motor, an inverter, a DC converter, and the like of an electric vehicle, and road noise, etc.

In this embodiment, the soundproof member 70 that is an example of the attenuating member has the insulating function that insulates sound and the sound absorbing function that absorbs sound. Therefore, the intrusion of the external vehicle-cabin noise into the vehicle cabin 16 can be suppressed by the insulating function of the soundproof member 70, and the intrusion of the sound generated by the motor, etc. in the cover member 22 into the vehicle cabin 16 can be suppressed by the absorption of the sound by the sound absorbing function.

Furthermore, in this embodiment, it is possible to arrange the respective component members 72, 150, 200, 320, and 500 forming the soundproof member 70, which is an example of the attenuating member, on the inner surface of the cover member 22 in a close contact without gaps. Therefore, even in a case in which the cover member 22 is made to have a thin wall in order to reduce the weight, it is possible to achieve an effect of suppressing noise intrusion into the vehicle cabin 16 by the cover member 22.

In addition, each of the component members 150, 200, 320, and 500 has the edge portion in contact with adjacent other component member (70, 150, 200, 320, 500), the edge portion being formed in a straight line.

In this configuration, compared with a case in which the edge portions at which the adjacent component members (150, 200, 320, 500) come to contact with each other are formed of complex curved lines, it becomes possible to simplify the structure of each of the component members 150, 200, 320, and 500. In addition, a work of assembling the adjacent component members (150, 200, 320, 500) with each other becomes easier.

In addition, in the assembled state 600, the one of the component members (150, 200, 320, 500) and the other of the component members (150, 200, 320, 500) adjacent to each other are provided such that their end portions are overlapped with each other.

In this configuration, because the end portions of the adjacent component members (150, 200, 320, 500) are overlapped with each other, compared with a case in which a gap is formed between the end portions of the adjacent component members (150, 200, 320, 500), it is possible to suppress leakage of the sound.

In addition, the cover member 22 has the cover main body 50 configured to form the upwardly open accommodation space 54 in a state in which at least the part of the vehicle air-conditioning device 20 and the opening portion 30 are covered and the lid portion 52 configured to close the upper opening portion 50a of the cover main body 50, and the end portion of the cover main body 50 surrounding at part of the upper opening portion 50a is provided with the clip 622 serving as the support member, the clip 622 being configured to support the end portion of each of the component members 150, 200, and 320 so as to extend along the side wall surface (82, 84, 86) of the cover main body 50.

In this configuration, the end portion of the cover main body 50 is provided with the clips 622 that support the end portions of the respective component members 150, 200, and 320 so as to extend along the side wall surface (82, 84, 86) of the cover main body 50. Therefore, it is possible to suppress the falling down of each of the component members 150, 200, and 320 arranged along the side wall surface (82, 84, 86) by the clips 622.

Here, within the engine compartment 14, due to the arrangement of the cover member 22, the intrusion of the sound from above the cover member 22 tends to be increased, and the upper sides of the respective component members 150, 200, and 320 of the soundproof member 70 are formed to have a thicker wall.

The clips 622 that support the respective end portions of the component members 150, 200, and 320 are provided on the end portion of the cover main body 50 surrounding the part of the upper opening portion 50a. Therefore, it is possible to set the supporting positions by the clips 622 to the respective end portions of the component members 150, 200, and 320 that are formed to have a thicker wall. Thus, compared with a case in which the clips 622 support the end portion of the component member that is formed to have a thinner wall, the configuration of the supporting structure becomes simple.

In addition, the cover member 22 has the cover main body 50 that forms, together with the partition wall 18, the upwardly open accommodation space 54 and the lid portion 52 that closes the upper opening portion 50a of the cover main body 50. Therefore, by opening the upper opening portion 50a by opening the lid portion 52, it is possible to perform a maintenance work of the vehicle air-conditioning device 20.

In addition, the part of the vehicle air-conditioning device 20 arranged outside the vehicle cabin 16 is the blower motor BM that is the motor of the air blower 48, and the thickness dimension of the portion (KB) of the soundproof member 70 provided on the cover member 22is greater than the thickness dimension of other portion, the portion (KB) being arranged in proximity to the blower motor BM.

In this configuration, the blower motor BM that is the motor of the air blower 48 generates noise when it is operated, and there is a risk in that the generated noise intrudes into the vehicle cabin 16. Thus, by making the thickness dimension of the portion (KB) of the soundproof member 70, which is arranged in proximity to the blower motor BM, greater than the thickness dimension of the other portion, it becomes possible to reduce the intrusion of the noise generated by the blower motor BM into the vehicle cabin 16.

Especially, with the soundproof member 70 having the sound absorbing function, it becomes possible to increase the absorption capability of the noise generated by the blower motor BM.

Although the embodiment of the present invention has been described in the above, the above-mentioned embodiment merely illustrates a part of application examples of the present invention, and the technical scope of the present invention is not intended to be limited to the specific configurations of the above-described embodiment.

The present application claims a priority based on Japanese Patent Application No. 2022-199523 filed with the Japan Patent Office on December 14, 2022, the entire content of which are incorporated into this specification by reference.

## Claims

1. A cover structure of a vehicle air-conditioning device comprising:
a partition wall configured to separate an inside and outside of a vehicle cabin, in which a passenger rides, the partition wall having an opening portion in which a vehicle air-conditioning device is arranged, the vehicle air-conditioning device being provided across the inside and outside of the vehicle cabin; and
a cover member configured to cover the opening portion and at least a part of the vehicle air-conditioning device provided outside the vehicle cabin, wherein
the cover structure further comprises an attenuating member provided at an inner side of the cover member, the attenuating member being configured to attenuate sound, and
the attenuating member is formed of a plurality of component members forming the attenuating member in a state in which the component members are assembled by being brought into contact with each other.

2. The cover structure of the vehicle air-conditioning device according to claim 1, wherein
the component members have an edge portion in contact with adjacent other component member of the component members, the edge portion being formed in a straight line.

3. The cover structure of the vehicle air-conditioning device according to claim 2, wherein
in the state in which the component members are assembled, the one of the component members and the other of the component members adjacent to each other are provided such that their end portions are overlapped with each other.

4. The cover structure of the vehicle air-conditioning device according to claim 1, wherein
the cover member has a cover main body configured to form an upwardly open accommodation space in a state in which at least a part of the vehicle air-conditioning device and the opening portion are covered and a lid portion configured to close an upper opening of the cover main body, and
an end portion of the cover main body surrounding a part of the upper opening is provided with a support member, the support member being configured to support an end portion of the component member so as to extend along a side wall surface of the cover main body.

5. The cover structure of the vehicle air-conditioning device according to claim 1, wherein
the part of the vehicle air-conditioning device arranged outside the vehicle cabin is a motor of an air blower, and
a thickness of a portion of the attenuating member provided on the cover member is greater than a thickness of other portion, the portion being arranged in proximity to the motor.
